# EUROPEAN PATENT APPLICATION

(11) **EP 4 105 851 A1**
(43) Date of publication of application: **21.12.2022**
(21) Application number: 20926712.9
(22) Date of filing: 31.12.2020
(51) Int. Cl.: G06N 99/00

(54) **MODEL BUILDING METHOD AND DEVICE**

(30) Priority: 27.03.2020 CN 202010231581
(71) Applicant: Huawei Technologies Co., Ltd., Shenzhen, Guangdong 518129, (CN)
(72) Inventor: SUN, Xudong, Shenzhen, Guangdong 518129 (CN); ZHANG, Yanfang, Shenzhen, Guangdong 518129 (CN); CHANG, Qinglong, Shenzhen, Guangdong 518129 (CN); ZHANG, Liang, Shenzhen, Guangdong 518129 (CN)
(74) Representative: Thun, Clemens
(86) International application number: PCT/CN2020/142237
(87) International publication number: WO 2021/190068

(57) **Abstract**

A modeling method and an apparatus are disclosed, and relate to the computer field. The method includes: obtaining a first data set of a first indicator, and determining, based on the first data set, a second indicator similar to the first indicator (401); and determining a first model based on one or more second models associated with the second indicator (402). The first model is used to detect a status of the first indicator, and the status of the first indicator includes an abnormal state or a normal state. The second models are used to detect a status of the second indicator, and the status of the second indicator includes an abnormal state or a normal state. The method reduces costs and improves modeling efficiency.

## Description

This application claims priority to Chinese Patent Application No. 202010231581.5, filed with the China National Intellectual Property Administration on March 27, 2020 and entitled "MODELING METHOD AND APPARATUS", which is incorporated herein by reference in its entirety.

### TECHNICAL FIELD

Embodiments of this application relate to the computer field, and in particular, to a modeling method and an apparatus.

### BACKGROUND

Anomaly detection may be performed on data of a key performance indicator (key performance indicator, KPI), to determine whether the KPI satisfies an expected effect. Generally, during the anomaly detection, professional personnel analyze and detect the data based on experience, to determine whether the data is abnormal, so as to determine whether the KPI is normal. As system complexity increases, a data volume becomes very large. Anomaly detection cannot be performed based on manual experience, and a model is required to perform anomaly detection.

Different KPIs need to be detected for different application scenarios. In a conventional technology, for all the different KPIs, historical data needs to be repeatedly trained, an algorithm is continuously optimized, and a final anomaly detection model is obtained based on a finally determined algorithm, to determine, based on data of the KPI, whether the KPI is abnormal. Consequently, not only extremely high time consumption and resource consumption are caused, but also modeling efficiency is low.

### SUMMARY

Embodiments of this application provide a modeling method and an apparatus, to reduce costs and improve modeling efficiency.

According to a first aspect, a modeling method is provided. The method includes: first obtaining a first data set of a first indicator, and determining, based on the first data set, a second indicator similar to the first indicator; and further determining a first model based on one or more second models associated with the second indicator. The first model is used to detect a status of the first indicator, and the status of the first indicator includes an abnormal state or a normal state. The second models are used to detect a status of the second indicator, and the status of the second indicator includes an abnormal state or a normal state.

In different application scenarios, with reference to the method provided in this embodiment of this application, a new KPI (for example, the first indicator in this embodiment of this application) may be determined based on a historical KPI (for example, the second indicator in this embodiment of this application), so that model construction efficiency can be greatly improved, and resource consumption is reduced.

With reference to the first aspect, in a first possible implementation of the first aspect, the first data set includes values of the first indicator at a plurality of different time points.

In this embodiment of this application, a specific implementation of the first data set is provided. The first indicator may be a time series-type indicator.

With reference to the first aspect or the first possible implementation of the first aspect, in a second possible implementation of the first aspect, the determining, based on the first data set, a second indicator similar to the first indicator includes: determining a second data set similar to the first data set, and using an indicator corresponding to the second data set as the second indicator.

In this embodiment of this application, a specific method for determining a similar indicator is provided. The similar indicator may be determined by using similarity between data sets. High similarity between data sets indicates high similarity between indicators corresponding to the data sets.

With reference to the second possible implementation of the first aspect, in a third possible implementation of the first aspect, the determining a second data set similar to the first data set includes: determining the second data set whose feature vector is similar to a feature vector of the first data set.

In this embodiment of this application, a method for determining similarity between data sets is provided. A similarity degree between different data sets may be determined by using similarity between feature vectors of a same feature in the data sets.

With reference to the third possible implementation of the first aspect, in a fourth possible implementation of the first aspect, a feature in the feature vector of the first data set and the feature vector of the second data set includes at least one of a value change trend, a value periodicity, and a value fluctuation feature.

In this embodiment of this application, a possible implementation of a feature of a data set is provided. A similarity degree between data sets may be determined by using a feature vector of the feature.

With reference to any one of the first aspect or the first possible implementation to the fourth possible implementation of the first aspect, in a fifth possible implementation of the first aspect, the determining a first model based on one or more second models associated with the second indicator includes: determining, as the first model, a model with optimal performance in the second models associated with the second indicator.

In the method provided in this embodiment of this application, a model with optimal performance in models associated with a historical indicator (for example, the second indicator) is determined as a model for a new indicator (for example, the first indicator), so that no time needs to be consumed to train the model for the new indicator. Anomaly detection may be performed on the new indicator by using the model with optimal performance. This improves modeling efficiency and ensures accuracy of the anomaly detection performed on the new indicator.

With reference to the fifth possible implementation of the first aspect, in a sixth possible implementation of the first aspect, before the determining, as the first model, a model with optimal performance in the second models associated with the second indicator, the method further includes: inputting the first data set into the second model, and determining performance of the second model based on an output of the second model.

In this embodiment of this application, a method for determining model performance is provided, to select a model with optimal performance.

With reference to the fifth possible implementation of the first aspect, in a seventh possible implementation of the first aspect, before the determining, as the first model, a model with optimal performance in the second models associated with the second indicator, the method further includes: inputting the first data set into the second model, and processing the first data set based on a data preprocessing algorithm and a feature selection algorithm that are included in the second model, to obtain a first feature set; filtering the first feature set according to a feature filter rule, to obtain a second feature set, where a quantity of features in the second feature set is less than a quantity of features in the first feature set; and processing the second feature set by using an anomaly detection algorithm in the second model, and determining performance of the second model based on a processing result of the anomaly detection algorithm.

In this embodiment of this application, when the performance of the second model is determined, the feature set may be further filtered according to the feature filter rule, to reduce a quantity of features, so that a computation volume is reduced, and the modeling efficiency is improved.

With reference to the seventh possible implementation of the first aspect, in an eighth possible implementation of the first aspect, the feature filter rule is used to select, through filtering, a feature that matches an attribute of the first indicator.

In this embodiment of this application, the feature filter rule is used to select, from a large quantity of features, the feature that matches the attribute of the first indicator, so that the quantity of features can be reduced.

With reference to the seventh possible implementation or the eighth possible implementation of the first aspect, in a ninth possible implementation of the first aspect, before the processing the second feature set by using an anomaly detection algorithm, the method further includes: determining that the anomaly detection algorithm included in the second model satisfies an anomaly detection algorithm filter rule.

In this embodiment of this application, models may be filtered by using the anomaly detection algorithm filter rule. A model that does not satisfy the filter rule is not further processed, and only a model that satisfies the filter rule is further processed, that is, the feature set is filtered according to the feature filter rule, to reduce the quantity of features.

With reference to the ninth possible implementation of the first aspect, in a tenth possible implementation of the first aspect, the anomaly detection algorithm filter rule is used to select, through filtering, an anomaly detection algorithm that matches the attribute of the first indicator.

In this embodiment of this application, the anomaly detection algorithm filter rule is used to select, from a plurality of models through filtering, the algorithm or a model that matches the attribute of the first indicator. The models associated with the second indicator may be filtered, so that a quantity of models can be reduced, thereby reducing the computation volume and a quantity of times that the models are trained.

With reference to the fifth possible implementation of the first aspect, in an eleventh possible implementation of the first aspect, before the determining, as the first model, a model with optimal performance in the second models associated with the second indicator, the method includes: determining a second model that satisfies an anomaly detection algorithm filter rule in the second models associated with the second indicator; inputting the first data set into the second model that satisfies the anomaly detection algorithm filter rule, and processing the first data set based on a data preprocessing algorithm and a feature selection algorithm in the second model that satisfies the anomaly detection algorithm filter rule, to obtain a first feature set; and processing the first feature set by using an anomaly detection algorithm in the second model that satisfies the anomaly detection algorithm filter rule, and determining performance of the second model based on a processing result of the anomaly detection algorithm.

In this embodiment of this application, the feature may not be filtered, and only the model (algorithm) is filtered.

With reference to the eleventh possible implementation of the first aspect, in a twelfth possible implementation of the first aspect, before the processing the first feature set by using an anomaly detection algorithm in the second model that satisfies the anomaly detection algorithm filter rule, the method further includes: filtering the first feature set according to a feature filter rule.

With reference to the third possible implementation or the fourth possible implementation of the first aspect, in a thirteenth possible implementation of the first aspect, the determining the second data set whose feature vector is similar to a feature vector of the first data set includes: using a data set as the second data set, where a similarity degree between a feature vector of the data set and the feature vector of the first data set is greater than a first threshold; or determining a similarity degree between each of feature vectors of a plurality of data sets and the feature vector of the first threshold, sorting the plurality of data sets in descending order of similarity degrees, and using the first m data sets in the plurality of data sets as the second data sets.

Specifically, a similarity degree between feature vectors may be determined based on a distance between the feature vectors. A shorter distance between the feature vectors indicates a greater similarity degree between the feature vectors. For example, if a distance between a feature vector and the feature vector of the first data set is less than a second threshold, it may be considered that a similarity degree between the feature vector and the feature vector of the first data set is greater than the first threshold, and a data set corresponding to the feature vector is used as the second data set.

Alternatively, a distance between each of feature vectors of a plurality of data sets and the feature vector of the first data set is determined, the plurality of data sets are sorted in ascending order of distances, and the first m data sets in the plurality of data sets are used as the second data sets.

According to a second aspect, an apparatus is provided. The apparatus includes an obtaining unit, configured to obtain a first data set of a first indicator; a data processing unit, configured to determine, based on the first data set, a second indicator similar to the first indicator; and a modeling unit, configured to determine a first model based on one or more second models associated with the second indicator. The first model is used to detect a status of the first indicator, and the status of the first indicator includes an abnormal state or a normal state. The second models are used to detect a status of the second indicator, and the status of the second indicator includes an abnormal state or a normal state.

With reference to the second aspect, in a first possible implementation of the second aspect, the first data set includes values of the first indicator at a plurality of different time points.

With reference to the second aspect or the first possible implementation of the second aspect, in a second possible implementation of the second aspect, the data processing unit is specifically configured to determine a second data set similar to the first data set, and use an indicator corresponding to the second data set as the second indicator.

With reference to the second possible implementation of the second aspect, in a third possible implementation of the second aspect, the data processing unit is specifically configured to determine the second data set whose feature vector is similar to a feature vector of the first data set.

With reference to the third possible implementation of the second aspect, in a fourth possible implementation of the second aspect, a feature in the feature vector of the first data set and the feature vector of the second data set includes at least one of a value change trend, a value periodicity, and a value fluctuation feature.

With reference to any one of the second aspect or the first possible implementation to the fourth possible implementation of the second aspect, in a fifth possible implementation of the second aspect, the modeling unit is specifically configured to determine, as the first model, a model with optimal performance in the second models associated with the second indicator.

With reference to the fifth possible implementation of the second aspect, in a sixth possible implementation of the second aspect, the modeling unit is further configured to input the first data set into the second model, and determine performance of the second model based on an output of the second model.

With reference to the fifth possible implementation of the second aspect, in a seventh possible implementation of the second aspect, the modeling unit is further configured to input the first data set into the second model, and process the first data set based on a data preprocessing algorithm and a feature selection algorithm that are included in the second model, to obtain a first feature set; filter the first feature set according to a feature filter rule, to obtain a second feature set, where a quantity of features in the second feature set is less than a quantity of features in the first feature set; and process the second feature set by using an anomaly detection algorithm in the second model, and determine performance of the second model based on a processing result of the anomaly detection algorithm.

With reference to the seventh possible implementation of the second aspect, in an eighth possible implementation of the second aspect, the feature filter rule is used to select, through filtering, a feature that matches an attribute of the first indicator.

With reference to the seventh possible implementation or the eighth possible implementation of the second aspect, in a ninth possible implementation of the second aspect, the modeling unit is further configured to: before processing the second feature set by using the anomaly detection algorithm, determine that the anomaly detection algorithm included in the second model satisfies an anomaly detection algorithm filter rule.

With reference to the ninth possible implementation of the second aspect, in a tenth possible implementation of the second aspect, the anomaly detection algorithm filter rule is used to select, through filtering, an anomaly detection algorithm that matches the attribute of the first indicator.

With reference to the fifth possible implementation of the second aspect, in an eleventh possible implementation of the second aspect, the modeling unit is further configured to determine a second model that satisfies an anomaly detection algorithm filter rule in the second models associated with the second indicator; input the first data set into the second model that satisfies the anomaly detection algorithm filter rule, and process the first data set based on a data preprocessing algorithm and a feature selection algorithm in the second model that satisfies the anomaly detection algorithm filter rule, to obtain a first feature set; and process the first feature set by using an anomaly detection algorithm in the second model that satisfies the anomaly detection algorithm filter rule, and determine performance of the second model based on a processing result of the anomaly detection algorithm

With reference to the eleventh possible implementation of the second aspect, in a twelfth possible implementation of the second aspect, the modeling unit is further configured to: before processing the first feature set by using the anomaly detection algorithm in the second model that satisfies the anomaly detection algorithm filter rule, filter the first feature set according to a feature filter rule.

According to a third aspect, an apparatus is provided. The apparatus includes at least one processor and a memory, and the at least one processor is coupled to the memory. The memory is configured to store a computer program. The at least one processor is configured to execute the computer program stored in the memory, to enable the apparatus to perform the method in any one of the first aspect or the possible implementations of the first aspect.

The apparatus may be a terminal device, a server, or the like. The terminal device herein includes but is not limited to a smartphone, a vehicle-mounted apparatus (for example, a self-driving device), a personal computer, an artificial intelligence device, a tablet computer, a personal digital assistant, an intelligent wearable device (for example, a smart watch or band, or smart glasses), an intelligent voice device (for example, a smart speaker), a virtual reality/mixed reality/enhanced display device or a network access device (for example, a gateway), or the like. The server may include a storage server, a computing server, or the like.

According to a fourth aspect, this application discloses a computer-readable storage medium. The computer-readable storage medium stores instructions. When the computer-readable storage medium is run on the apparatus in any one of the second aspect and the implementations of the second aspect or the third aspect, the apparatus is enabled to perform the method in any one of the first aspect or the implementations of the first aspect.

According to a fifth aspect, this application provides a chip. The chip includes an interface and a processor. The processor is configured to obtain a computer program through the interface and implement the method in any one of the first aspect or the possible implementations of the first aspect.

According to a sixth aspect, this application provides a chip. The chip includes a plurality of circuit modules. The plurality of circuit modules are configured to implement the method in any one of the first aspect or the possible implementations of the first aspect. In some implementations, the plurality of circuit modules implement, together with a software program, the method in any one of the first aspect or the possible implementations of the first aspect.

### BRIEF DESCRIPTION OF DRAWINGS

FIG. 1 is an architectural diagram of a system according to an embodiment of this application;
FIG. 2 is a diagram of a framework of an anomaly detection model according to an embodiment of this application;
FIG. 3 is a block diagram of a structure of an apparatus according to an embodiment of this application;
FIG. 4 is a flowchart of a modeling method according to an embodiment of this application;
FIG. 5 is another flowchart of a modeling method according to an embodiment of this application;
FIG. 6 is another block diagram of a structure of an apparatus according to an embodiment of this application; and
FIG. 7 is another block diagram of a structure of an apparatus according to an embodiment of this application.

### DESCRIPTION OF EMBODIMENTS

The following describes technical solutions of this application with reference to the accompanying drawings.

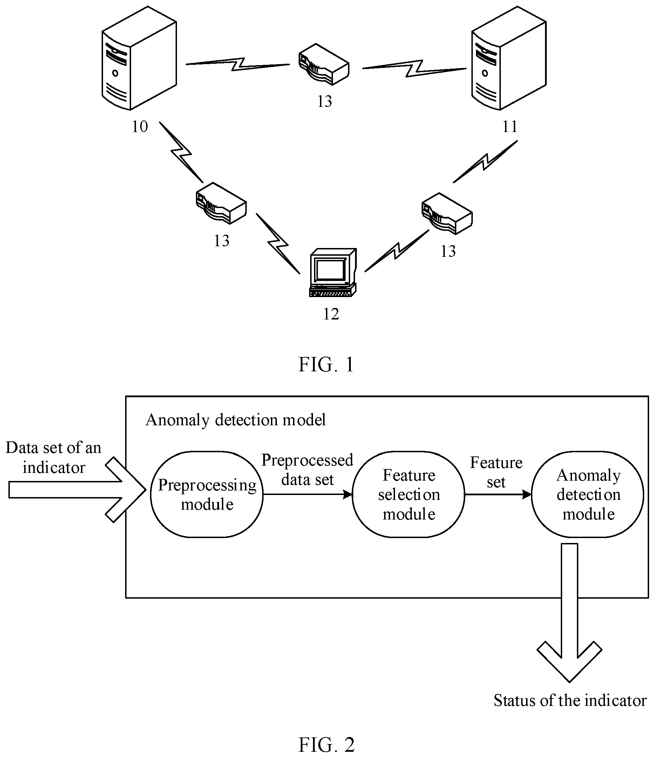

A method provided in embodiments of this application is applicable to a system shown in FIG. 1. As shown in FIG. 1, the system network element includes a data storage device 10, a computing device 11, and a terminal device 12. The data storage device 10 and the computing device 11 may be integrated on a single device, or may be separately deployed on different devices.

The system may further include a network device 13. The devices shown in FIG. 1 may communicate with each other by using the network device 13. For example, the data storage device 10 and the computing device 11 may communicate with each other by using the network device 13, and the computing device 11 and the terminal device 12 may communicate with each other by using the network device 13.

In a possible implementation, the network device 13 includes devices such as a router, a switch, a base station, and a network cable, and is configured to implement data transmission in the communication system shown in FIG. 1.

The data storage device may be deployed in a cloud, and is used for historical data, for example, historical data of various network indicators.

The computing device may obtain the historical data from the data storage module, construct a model based on the historical data, and send the constructed model to the terminal device.

The terminal device may receive the model sent by the computing device, and perform data monitoring by using the model. For example, the terminal device obtains an anomaly detection model from the computing device, and performs anomaly detection on network data by using the model.

First, terms used in embodiments of this application are explained and described.

### (1) Indicator

The indicator in embodiments of this application may be a time series-type indicator. A time series may include a group of time points sorted in chronological order. A time interval between two adjacent time points is a constant value.

At a time point included in the time series, when a value of an indicator fluctuates with a change of the time point, the indicator may be referred to as a time series-type indicator. In an anomaly detection scenario, the time series-type indicator includes a network key performance indicator (key performance indicator, KPI), and the network KPI includes a network device KPI, a network service KPI, and the like. The network device KPI may be central processing unit (CPU, central processing unit) utilization, an optical power, or the like. The network service KPI may be network traffic, a network throughput, a packet loss rate, a delay, a quantity of accessing users, or the like.

### (2) Data set of an indicator

In embodiments of this application, the data set of the indicator includes values of the indicator that are collected at different time points. For example, a data set of a throughput may include throughputs collected at different time points. For example, the data set may be {0.9, 0.8, 0.75, 1.1}.

### (3) Status of an indicator

In embodiments of this application, the status of the indicator may be used to indicate whether the indicator is normal. Specifically, the status of the indicator includes a normal state or an abnormal state. For example, the status of the indicator may be a status of an entire data set. For example, the status of the data set of the indicator is abnormal or normal. The status of the indicator may alternatively be a status of each value in the data set of the indicator. For example, the data set of the indicator is {0.9, 0.8, 0.75, 1.1}. The status of the indicator may be that 0.9, 0.8, and 0.75 are normal, and 1.1 is abnormal.

The abnormal state of the indicator includes a sudden increase in a value of the indicator, a sudden decrease in the value of the indicator, a change in an average value of the indicator, or the like. This is not limited in embodiments of this application.

### (4) Anomaly detection model

In embodiments of this application, the anomaly detection model is used to determine a status of an indicator. An input of the anomaly detection model is a data set of the indicator, and an output is the status of the indicator, which may be a status of each value in the data set. The status of the indicator includes that the indicator is in a normal state or an abnormal state.

Refer to FIG. 2. An anomaly detection model includes a preprocessing module, a feature selection module, and an anomaly detection module. The preprocessing module is configured to preprocess a data set of an indicator by using a data preprocessing algorithm, and input processed data into the feature selection module. Specifically, data preprocessing may be deleting duplicate data and abnormal data from the data set, or standardizing data.

The feature selection module is configured to receive the data from the preprocessing module, and extract a feature of the data by using a feature selection algorithm, to obtain a feature set. The feature set includes the feature of the data, for example, a maximum value, a minimum value, or an average value. The feature selection module may further input the feature set into the anomaly detection module.

The anomaly detection module is configured to receive the feature set from the feature selection module, process the feature set by using an anomaly detection algorithm, and output a status of the indicator. The anomaly detection algorithm may be an algorithm (N-Sigma) that is based on statistics and data distribution, an algorithm that is based on a distance/density, a local-outlier-factor algorithm, an isolation forest, an algorithm that is based on prediction, for example, an autoregressive integrated moving average model (Autoregressive Integrated Moving Average Model, ARIMA), or the like. This is not limited in embodiments of this application.

The anomaly detection model may be a binary classification model, and the anomaly detection module may output two results: normal or abnormal. Alternatively, the anomaly detection model may output one value. The value indicates a possibility that the indicator is normal or a possibility that the indicator is abnormal. Whether the indicator is normal may be determined based on the value.

Embodiments of this application provide a modeling method. A first data set of a first indicator is first obtained, and a second indicator similar to the first indicator is determined based on the first data set. A first model used to determine a status of the first indicator may be further determined based on one or more second models associated with the second indicator. The first model is used to determine the status of the first indicator. Specifically, an input of the first model is a data set, for example, the first data set, of the first indicator, and an output of the first model is the status of the first indicator. The status of the first indicator includes an abnormal state or a normal state. The second models are used to determine a status of the second indicator. In different application scenarios, with reference to the method provided in embodiments of this application, a new KPI (for example, the first indicator in embodiments of this application) may be determined based on a historical KPI (for example, the second indicator in embodiments of this application), so that model construction efficiency can be greatly improved, and resource consumption is reduced.

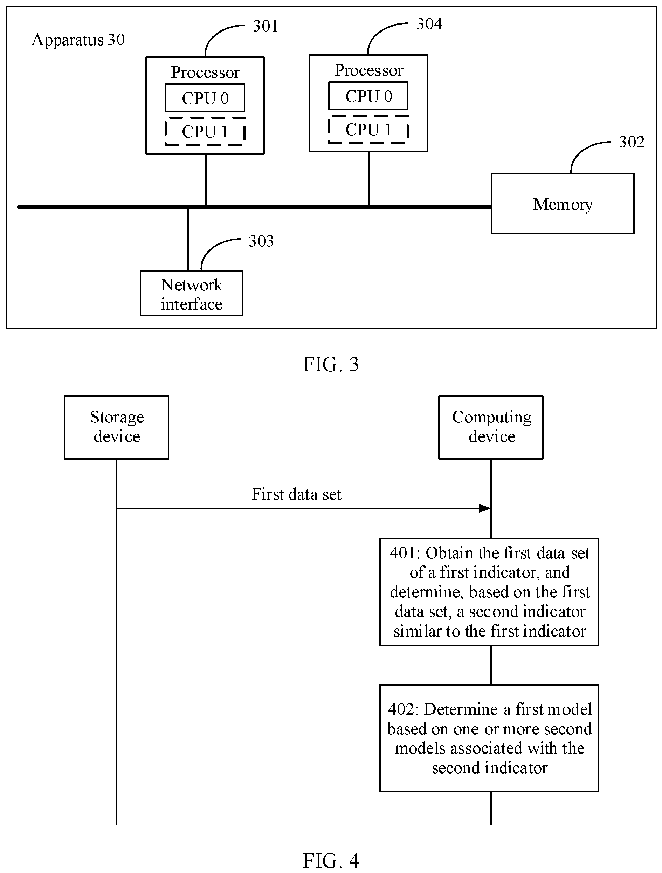

FIG. 3 is a schematic diagram of a hardware structure of an apparatus 30 according to an embodiment of this application. The apparatus 30 may be deployed on a computing device, or may be the computing device described in embodiments of this application. Refer to FIG. 3. The apparatus 30 includes a processor 301, a memory 302, and at least one network interface (in FIG. 3, only an example in which a network interface 303 is included is used for description). The processor 301, the memory 302, and the network interface 303 are connected to each other.

The processor 301 may be a general-purpose central processing unit (central processing unit, CPU), a microprocessor, an application-specific integrated circuit (application-specific integrated circuit, ASIC), or one or more integrated circuits configured to control program execution of the solutions of this application.

The network interface 303 is an interface of the apparatus 30, and is configured to communicate with another device or a communication network such as the Ethernet, a radio access network (radio access network, RAN), or a wireless local area network (wireless local area network, WLAN).

The memory 302 may be a read-only memory (read-only memory, ROM) or another type of static data center that can store static information and instructions, or a random access memory (random access memory, RAM) or another type of dynamic data center that can store information and instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compact disc, a laser disc, an optical disc, a digital versatile disc, a Blu-ray disc, or the like), a magnetic disk storage medium or another magnetic data center, or any other medium that can be used to carry or store expected program code in a form of an instruction or a data structure and that is accessible by a computer. This is not limited thereto. The memory may exist independently, and is connected to the processor through a communication line 302. The memory may alternatively be integrated with the processor.

The memory 302 is configured to store computer-executable instructions for executing the solutions of this application, and the execution is controlled by the processor 301. The processor 301 is configured to execute the computer-executable instructions stored in the memory 302, to implement the intent processing method provided in the following embodiments of this application.

Optionally, the computer-executable instructions in this embodiment of this application may also be referred to as application program code. This is not specifically limited in this embodiment of this application.

During specific implementation, in an embodiment, the processor 301 may include one or more CPUs such as a CPU 0 and a CPU 1 in FIG. 3.

During specific implementation, in an embodiment, the apparatus 30 may include a plurality of processors, for example, the processor 301 and a processor 304 shown in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

The apparatus 30 may be a general-purpose device or a dedicated device. During specific implementation, the apparatus 30 may be a desktop computer, a network apparatus, an embedded device, or another device having a structure similar to that in FIG. 3. A type of the apparatus 30 is not limited in this embodiment of this application.

An embodiment of this application provides a modeling method. As shown in FIG. 4, the method includes the following steps.

401: Obtain a first data set of a first indicator, and determine, based on the first data set, a second indicator similar to the first indicator.

Refer to FIG. 4. A computing device may obtain the first data set from a storage device. In addition, the first data set may include a value that is collected in a time period and that is of the first indicator. The first data set is processed and analyzed, to determine whether the first indicator is abnormal. Specifically, the first data set may be input into an anomaly detection model that matches the first indicator, and whether the first indicator is abnormal is determined based on an output of the model.

It may be understood that similar indicators have similar fluctuation trends over time, and a same algorithm may be used to determine statuses of the similar indicators. In this embodiment of this application, to reduce modeling complexity and improve modeling efficiency, for a new indicator, a model for an indicator similar to the new indicator may be used to detect a data set of the new indicator, to determine whether a status of the new indicator is abnormal. For example, after a data set (for example, the first data set in this embodiment of this application) of the first indicator is obtained, a model for an indicator similar to the first indicator may be used to process the data set of the first indicator, and whether the first indicator is abnormal is determined based on a processing result.

It should be noted that when features, for example, change trends of the indicators over time, periodicities of the indicators, or fluctuations of the indicators, are similar, data sets of the indicators are also similar. In this embodiment of this application, similarity between the indicators is determined based on similarity between the data sets. High similarity between data sets indicates high similarity between indicators.

For example, after obtaining the first data set, the computing device may determine a data set, for example, the second data set in this embodiment of this application, similar to the first data set. The computing device may further determine, based on the second data set, an indicator, for example, the second indicator in this embodiment of this application, similar to the first indicator.

It should be noted that an indicator corresponding to the second data set is the second indicator, and the second data set is a data set of the second indicator. The second data set is input into an anomaly detection model, so that whether a status of the second indicator is abnormal may be determined based on an output of the model. In this embodiment of this application, the model for performing anomaly detection on the second indicator may be referred to as a model associated with the second indicator, and the second indicator may be associated with a plurality of models. Certainly, there may be a plurality of indicators similar to the first indicator, that is, there are a plurality of second indicators, and each second indicator may be associated with one or more models.

In this embodiment of this application, similarity between data sets may be determined in the following two manners.

In a first manner, the similarity between the data sets is determined based on values in the data sets. More closer values in the data sets indicate high similarity between the data sets.

Specifically, a similarity degree between the first data set and another historical data set is calculated based on values in the data sets, and m historical data sets with a higher similarity degree are used as second data sets. Each second data set may correspond to one indicator, for example, the second indicator in this embodiment of this application. The m second data sets may correspond to m second indicators.

In addition, each second indicator may have n associated anomaly detection models, for example, a second model in this embodiment of this application. A structure of the second model is shown in FIG. 2, and details are not described herein again. Therefore, the m second indicators similar to the first indicator may be associated with m×n second models.

For example, a data set 1 is {0.9, 0.8, 0.75, 1.1}, a data set 2 is {0.3, 0.4, 0.5, 1.1}, a data set 3 is {0.9, 0.8, 0.6, 1.1}, and a data set 4 is {0.7, 0.6, 0.75, 1.1}. In this case, the data set 3 is closest to the data set 1. A model associated with the data set 3 is the second model in this embodiment of this application.

In a second manner, feature vectors of the data sets are determined, and the similarity between the data sets is determined based on the feature vectors. Higher similarity between feature vectors of a same feature of different data sets indicates higher similarity between the data sets.

During specific implementation, a feature of a data set is first determined, and a feature vector of the data set may be further constructed based on the feature. The feature vector of the data set includes the feature of the data set. In a possible implementation, the feature vector includes a value of the feature. Specifically, the feature of the data set may be a data feature or an extracted feature.

It should be noted that the data feature is a feature of data in the data set. For example, the data feature includes a value periodicity, a value change trend, or a value fluctuation feature. The value periodicity is a periodicity at which values in the data set are periodically sorted. For example, the value periodicity may be duration, including a plurality of time points. The value periodicity may alternatively a quantity of values. The value change trend is used to reflect a change trend of the value in the data set, for example, a continuous increase, a continuous decrease, first increasing and then decreasing, first decreasing and then increasing, or satisfying normal distribution. The value fluctuation feature is used to reflect a fluctuation status of the value in the data set. For example, the value fluctuation feature may be a function that represents a fluctuation curve of the value in the data set, or may represent a specified value in the data set, for example, a maximum value, a minimum value, or an average value in the data set.

The extracted feature is a feature generated when the data in the data is processed. For example, the extracted feature may include a statistics feature, a fitting feature, or a frequency domain feature. The statistics feature is a statistical feature of the data in the data set. The statistics feature includes a quantity feature and an attribute feature. The quantity feature includes a metering feature and a counting feature. The quantity feature may be directly represented by using a value. For example, consumption values of a plurality of resources such as a CPU, a memory, and an I/O resource are metering features. An anomaly quantity and a quantity of devices working normally are counting features. The attribute feature cannot be directly represented by using a value. For example, the attribute feature may be whether a device is abnormal or whether a device is broken down. A feature in the statistics feature is an indicator to which attention needs to be paid during statistics collection. For example, the attribute feature includes a moving average value (Moving_average) or a weighted average value (Weighted_mv). The fitting feature is a feature during fitting of the data set. For example, the fitting feature may include an algorithm used during fitting, for example, an ARIMA. The frequency domain feature is a feature of the value in the data set in frequency domain. For example, frequency domain feature data includes a rule followed by distribution, in frequency domain, of the values in the data set, for example, a proportion of high-frequency components in the data set. Optionally, the frequency domain feature may be obtained by performing wavelet decomposition on the data set.

Further, a similarity degree between feature vectors of a same feature may be calculated, or the similarity degree between the feature vectors may be measured based on a distance between the feature vectors. In addition, the similarity degree between the feature vectors is negatively correlated to the distance between the feature vectors. In other words, a higher similarity degree between two feature vectors indicates a shorter distance, and a lower similarity degree indicates a longer distance.

Specifically, for feature vectors of a same feature of different data sets, a distance between the feature vectors may be first determined, and then a similarity degree between the feature vectors is determined based on the distance. The distance between the feature vectors may be calculated in a plurality of manners. For example, the distance is calculated by using a Euclidean distance formula, a Chebyshev distance formula, a cosine distance formula, a Mahalanobis distance formula, or another distance formula.

For example, a feature vector of the first data set is (x1, y1), and a feature vector of the second data set is (x2, y2). A distance between the vector (x1, y1) and the vector (x2, y2) is calculated. When the distance is less than a second threshold (which may be set based on experience), it is determined that a similarity degree between the vector (x1, y1) and the vector (x2, y2) is high. For example, when the similarity degree between the vector (x1, y1) and the vector (x2, y2) is greater than a first threshold, it is determined that the second data set is similar to the first data set, that is, the indicator corresponding to the second data set is similar to the indicator corresponding to the first data set.

Alternatively, a similarity degree between each of feature vectors of a plurality of data sets and the feature vector of the first data set is determined, the plurality of data sets are sorted in descending order of similarity degrees, and the first m sorted data sets are used as second data sets. m is an integer greater than or equal to 1, and may be set based on experience or an actual requirement. This is not limited herein.

For example, a feature vector of the first data set is (x1, y1), a feature vector of a data set 2 is (x2, y2), a feature vector of a data set 3 is (x3, y3), a feature vector of a data set 4 is (x4, y4), and a feature vector of a data set 5 is (x5, y5). A similarity degree between (x1, y1) and each of (x2, y2), (x3, y3), (x4, y4), and (x5, y5) is calculated. The feature vectors are sorted in descending order of similarity degrees as follows: (x3, y3), (x2, y2), (x4, y4), and (x5, y5), that is, the data sets are sorted in descending order of the similarity degrees as follows: the data set 3, the data set 2, the data set 4, and the data set 5. Assuming that m=3, the first three data sets are used as second data sets similar to the first data set, that is, the data set 3, the data set 2, and the data set 4 are used as the second data sets.

Specifically, a similarity degree between feature vectors may be determined by using a distance between the feature vectors. For example, a distance between (x1, y1) and each of (x2, y2), (x3, y3), (x4, y4), and (x5, y5) is calculated. The feature vectors are sorted in ascending order of distances as follows: (x3, y3), (x2, y2), (x4, y4), and (x5, y5), that is, the feature vectors are sorted in descending order of similarity degrees as follows: (x3, y3), (x2, y2), (x4, y4), and (x5, y5).

402: Determine a first model based on the one or more second models associated with the second indicator.

After the second indicator similar to the first indicator is determined, the first model may be determined based on the second models associated with the second indicator. The first model is used to determine (detect) a status of the first indicator, to determine whether the first indicator is abnormal. Specifically, an input of the first model is the data set (for example, the first data set in this embodiment of this application) of the first indicator, and an output of the first model is the status of the first indicator.

In a possible implementation, the status of the first indicator includes an abnormal state or a normal state. For example, the first model may output two results: normal or abnormal. Alternatively, the first model may output one value. The value indicates a possibility that the indicator is normal or a possibility that the indicator is abnormal Whether the indicator is normal may be determined based on the value.

In a possible implementation, a model with optimal performance in the second models associated with the second indicator is determined as the first model. The model with optimal performance in all the second models may be a model with a highest accuracy rate. For example, the first data set of the first indicator is input into the m×n second models associated with the second indicator, and an accuracy rate of a status that is of the first indicator and that is output by each second model is calculated. A second model with a highest accuracy rate is the first model.

For example, the first data set is {0.9, 0.8, 0.75, 1.1}. 0.9, 0.8, and 0.75 are normal indicator values, and 1.1 is an abnormal indicator value. It is assumed that the second indicator is associated with three models, which are a model 1, a model 2, and a model 3. The first data set is separately input into the model 1, the model 2, and the model 3. An output result of the model 1 is that 0.9 and 0.8 are normal, and 0.75 and 1.1 are abnormal. An output of the model 2 is that 0.9, 0.8 and 0.75 are normal, and 1.1 is abnormal. An output result of the model 3 is that 0.9 is normal, and 0.8, 0.75, and 1.1 are abnormal. It can be learned that the model 2 has a highest accuracy rate, and the model 2 is determined as the anomaly detection model for the first indicator, namely, the first model in this embodiment of this application.

In the method provided in this embodiment of this application, a model with optimal performance in models associated with a historical indicator (for example, the second indicator) is determined as a model for a new indicator (for example, the first indicator), so that no time needs to be consumed to train the model for the new indicator. Anomaly detection may be performed on the new indicator by using the model with optimal performance. This improves modeling efficiency and ensures accuracy of the anomaly detection performed on the new indicator.

Optionally, before step 401, the computing device may determine an indicator corresponding to each historical data set and a model associated with each indicator. Specifically, the computing device may generate the following Table 1, to record a correspondence between the data set and the model.

**Table 1**

| Data set | | Model | | | |
|---|---|---|---|---|---|
| Data set ID | Data in the data set | Data preprocessing algorithm and parameter | Feature set | Feature selection algorithm and parameter | Anomaly detection algorithm and parameter |
| 1 | [1, 0.5, 3, 4.8, ..., 9] | P[5, 5] | [max, min, mean...] | F[0.95] | M[50, 10] |
| 1 | [1, 0.5, 3, 4.8, ..., 9] | Q[3, 5] | [median, min, mean...] | G[0.88] | N[30, 10] |
| 2 | [3, 0.8, 5, 12.5, ..., 20] | O[3, 3] | [median, variance, mean...] | E[0.77] | L[30, 20] |
| 2 | [3, 0.8, 5, 12.5, ..., 20] | R[6, 9] | [median, variance, yoy...] | D[1.5] | K[100, 10] |
| 2 | [3, 0.8, 5, 12.5, ..., 20] | T[5, 2] | [max, variance, yoy...] | H[0.83] | Y[3, 9] |
| ... | ... | ... | ... | ... | ... |

It should be noted that a parameter of an algorithm may alternatively be an input of the algorithm, and the algorithm may be determined based on the parameter of the algorithm. For example, an algorithm f(x, y) = ax + by, where a and b may be referred to as parameters of the algorithm f(x, y). For example, the parameters of the algorithm are [1, 3], that is, a = 1 and b = 3, and the algorithm is x + 3y. Refer to Table 1. A data set is first processed by using the data preprocessing algorithm, processed data is used as an input of the feature selection algorithm, the data is processed by using the feature selection algorithm and a feature set is output, the feature set is processed by using the anomaly detection algorithm, and a status of an indicator is output.

Refer to Table 1. It is assumed that a data set 1 [1, 0.5, 3, 4.8, ..., 9] and a data set 2 [3, 0.8, 5, 12.5, ..., 20] are similar to the first data set. There are five determined second models, which are two models associated with the data set 1 [1, 0.5, 3, 4.8, ..., 9] and three models associated with the data set 2 [3, 0.8, 5, 12.5, ..., 20].

In a possible implementation, before the model with optimal performance in the second models associated with the second indicator is determined as the first model, a feature set may be further filtered according to a feature filter rule, to reduce a quantity of features, reduce a processing amount of the computing device, and further improve the modeling efficiency.

For example, the data set (for example, the first data set in this embodiment of this application) of the first indicator is input into the second model, and the first data set is processed based on a data preprocessing algorithm included in the second model, to obtain a first feature set.

The first feature set may be further filtered according to the feature filter rule, to obtain a second feature set. A quantity of features in the second feature set is less than a quantity of features in the first feature set.

Finally, the second feature set is processed by using an anomaly detection algorithm in the second model, and performance of the second model is determined based on a processing result of the anomaly detection algorithm. Specifically, the processing result of the anomaly detection algorithm may be the status of the first indicator. For example, the anomaly detection algorithm outputs a status of each value in the first data set, so that an accuracy rate of anomaly detection of the second model can be determined, to determine the performance of the second model.

It should be noted that the feature filter rule is a filter rule determined according to an attribute of the indicator, and is used to obtain, through filtering (or select, through filtering), a feature that matches the attribute of the indicator. The filter rule may be an automatic filter rule or a manual-experience based filter rule. Detailed descriptions are as follows.

### (a) Automatic filter rule

The automatic filter rule means that the first data set is first processed, to extract a key feature of the data, and the feature set of the first indicator is generated based on the key feature. For example, the key feature is a periodicity feature, a discreteness feature, a trend feature, a tiered feature, or a randomness feature of the data.

Further, a corresponding feature filter rule is automatically set based on the attribute of the indicator, the feature set is automatically filtered, and a feature that satisfies the automatic filter rule is selected through filtering. For example, the attribute of the indicator is that a value of the indicator easily changes greatly in an abnormal event. A feature filter rule is automatically set, the feature set is filtered, and a filtered feature set includes the feature that the value easily changes greatly in an abnormal event.

Alternatively, when the first indicator is a smooth-periodicity indicator, a feature filter rule is automatically set, the feature set is filtered, and a filtered feature set (for example, the second feature set in this embodiment of this application) is output. The filtered feature set may include a simple moving average, a weighted moving average, an exponential moving average, a periodicity, or the like.

### (b) Manual-experience based filter rule

The manual-experience based filter rule is a feature filter rule determined by professional personnel based on historical experience. The attribute of the indicator is first determined based on the historical experience, and a feature that matches the attribute of the indicator is determined based on the attribute of the indicator. A feature filter rule may alternatively be manually input, to obtain, through filtering (select, through filtering), the feature that matches the attribute of the indicator.

For example, the attribute of the first indicator is an abnormal jitter, an abnormal sudden increase, or an abnormal sudden decrease. It is determined, based on manual experience, that a feature that matches the attribute of the first indicator is binned entropy, a year-on-year change, or the like. A feature filter rule may alternatively be input, to obtain, through filtering, the feature such as the binned entropy or the year-on-year change. The computing device receives the input feature filter rule, and filters, according to the feature filter rule, the first feature set output by using the feature selection algorithm, to obtain the second feature set.

Optionally, in this manner, models may be further filtered by using an anomaly detection algorithm filter rule. A model that does not satisfy the filter rule is not further processed, and only a model that satisfies the filter rule is further processed, that is, the feature set is filtered according to the feature filter rule, to reduce the quantity of features.

For example, after all the second models associated with the second indicator are determined, a model that satisfies the anomaly detection algorithm filter rule is selected from the second models through filtering. The first data set is input each of the models for processing, and the feature set is filtered according to the feature filter rule, to reduce the processing amount.

It should be noted that a quantity of models associated with all second indicators similar to the first indicator may be very large, and efficiency of training all the models may be very low. The models associated with the second indicators are filtered by using the anomaly detection algorithm filter rule, so that the quantity of models can be reduced, thereby reducing a computation volume and a quantity of times that the models are trained.

The anomaly detection algorithm filter rule may be a rule determined based on various types of experience (such as device performance, computing performance, an application scenario, data quality, and expert experience), and is used to obtain, through filtering (select, through filtering), the anomaly detection algorithm that matches the attribute of the indicator. The anomaly detection algorithm that matches the attribute of the indicator may be an anomaly detection algorithm commonly used for the indicator.

In an anomaly detection scenario, anomaly detection performed on a time series is usually to find a data point far away from a relative established pattern or distribution. An anomaly of the time series includes a sudden increase, a sudden decrease, a change in an average value, or the like. An anomaly detection algorithm of the time series includes an algorithm (for example, an N-Sigma algorithm) that is based on statistics and data distribution, an algorithm (for example, a local-outlier-factor algorithm) that is based on a distance/density, an isolation forest algorithm, an algorithm (for example, an autoregressive integrated moving average model (Autoregressive Integrated Moving Average Model, ARIMA) algorithm) that is based on prediction, or the like. A corresponding machine learning model may be a model (for example, an N-Sigma model) that is based on statistics and data distribution, a model (for example, a local-outlier-factor model) that is based on a distance/density, an isolation forest model, or a model (for example, an ARIMA) that is based on prediction. The anomaly detection algorithm filter rule is used to obtain, through filtering, the algorithms or the machine learning models, so that the quantity of models is reduced, thereby reducing the computation volume and the quantity of times that the models are trained.

In a possible implementation, all the second models may be first filtered by using the anomaly detection algorithm filter rule, to reduce the quantity of models. When models obtained through filtering are trained, the quantity of features may be further reduced according to the feature filter rule, to reduce the processing amount of the computing device, and further improve the modeling efficiency.

For example, a second model that satisfies an anomaly detection algorithm filter rule in the second models associated with the second indicator is determined.

The first data set is input into the second model that satisfies the anomaly detection algorithm filter rule, and the first data set is processed based on a data preprocessing algorithm included in the second model that satisfies the anomaly detection algorithm filter rule, to obtain a first feature set.

The first feature set is processed by using an anomaly detection algorithm in the second model that satisfies the anomaly detection algorithm filter rule, and performance of the second model is determined based on a processing result of the anomaly detection algorithm

Optionally, in this implementation, after the models associated with all the second indicators similar to the first indicator are filtered, the feature set, for example, the first feature set in this embodiment of this application, output by using the feature selection algorithm may be further filtered according to the feature filter rule. Finally, the filtered feature set, namely, the second feature set, is output.

In the method provided in this embodiment of this application, a historical KPI (for example, the second indicator in this embodiment of this application) similar to a new indicator (for example, the first indicator in this embodiment of this application) may be determined, and a model for the new indicator is determined based on a model associated with the historical indicator, so that there is no need to develop a new model for the new indicator. This can greatly improve model construction efficiency and reduce resource consumption.

In this embodiment of this application, the computing device may further include a model search module and an analysis module. The model search module and the analysis module may be deployed on a same device, or may be deployed on different devices. This is not limited in this embodiment of this application. The model search module is configured to determine the second indicator similar to the first indicator and the second models associated with all the second indicators, and input the second models associated with all the second indicators into the analysis model. The analysis module is configured to train and optimize the second models by using the first data set of the first indicator, to finally obtain the first model used for the first indicator.

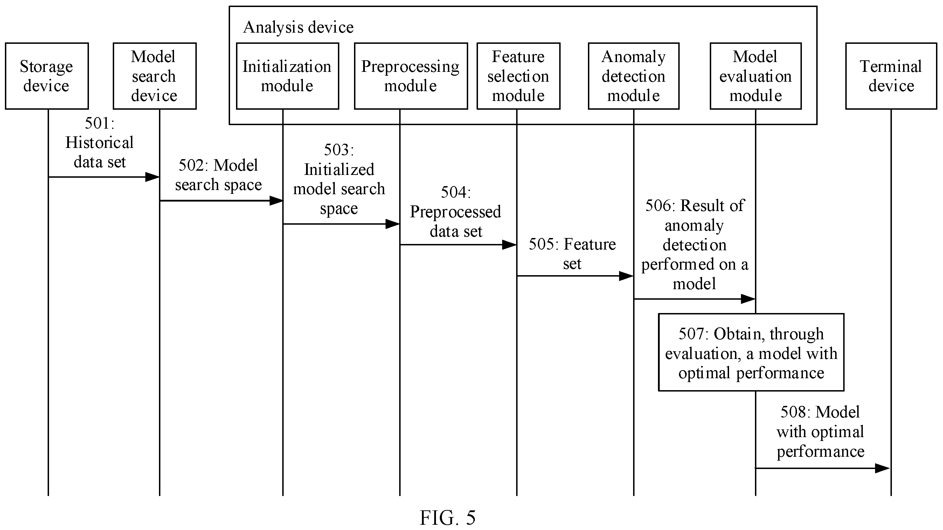

An embodiment of this application further provides a modeling method. A model search module is deployed on a model search device, and an analysis module is deployed on an analysis device. The analysis device includes an initialization module, a data preprocessing module, a feature selection module, an anomaly detection module, and a model evaluation module. A storage device, the model search device, and the analysis device interact with each other, and an anomaly detection model for a new KPI may be created based on a model for a historical KPI. As shown in FIG. 5, the method includes the following steps.

501: The model search device obtains a large quantity of historical data sets from the storage device, where the obtained historical data sets are sent to the model search device.

502: The model search device determines an anomaly detection model (that is, model search space) associated with a historical KPI, and sends the anomaly detection model associated with the historical KPI to the analysis module.

Specifically, the model search device repeatedly tries different combinations of a data preprocessing algorithm, a feature selection algorithm, an anomaly detection algorithm, and various algorithm parameters, to train a data set of the historical KPI, so as to obtain different models, and obtain the first n anomaly detection models with optimal performance for each historical KPI.

The model search device may further record a correspondence between the data set of the historical KPI and the model for the historical KPI, and generate the model search space based on the correspondence. The model search space includes the historical KPI and the anomaly detection model associated with the historical KPI. A second indicator in this embodiment of this application is an indicator similar to a first indicator in historical KPIs.

In a possible implementation, the search space is shown in the foregoing Table 1.

503: The initialization module in the analysis device initializes the model search space based on a data set of a new KPI, and sends initialized model search space to the data preprocessing module.

It should be noted that the new KPI may be the first indicator in this embodiment of this application, and the data set of the new KPI may be a first data set in this embodiment of this application.

Specifically, after obtaining the data set of the new KPI, the initialization module may further calculate similarity between the new data set and the historical data set based on meta learning, and select the first m historical data sets through filtering, where a similarity degree between the new data set and each of the m historical data sets is higher. Further, m×n models associated with the first m historical data sets are selected from the initial search space as the initialized search space (assuming that each historical data set is associated with n models), and the initialized search space is output to the data preprocessing module.

504: The data preprocessing module preprocesses the new data set by using a data preprocessing algorithm in the initialized model, and outputs a preprocessed data set to the feature selection module.

505: The feature selection module determines a feature set, and sends the feature set to the anomaly detection module.

Specifically, the feature selection module first processes the preprocessed data set by using a feature selection algorithm in the model (the model in the initialized search space), to obtain a first feature set, and then filters the first feature set according to a feature filter rule, to obtain a second feature set. A quantity of features in the second feature set is less than a quantity of features in the first feature set, so that a computation volume of feature selection is greatly reduced.

For the feature filter rule, refer to the foregoing detailed descriptions. Details are not described herein again.

In a possible implementation, the feature selection module may not filter the feature, but sends the first feature set to the anomaly detection module for anomaly detection.

The feature filter module may alternatively send the second feature set to the anomaly detection module.

506: The anomaly detection module performs anomaly detection based on the feature set input by the feature selection module, and sends a detection result to the model evaluation module.

Specifically, the anomaly detection module may first filter anomaly detection algorithms in the model by using an anomaly detection algorithm filter rule. If an anomaly detection algorithm in the model satisfies the filter rule, the anomaly detection module processes the second feature set by using the anomaly detection algorithm in the model, and outputs an anomaly detection result, namely, a status of the new KPI.

Optionally, if the anomaly detection algorithms in the model do not satisfy the filter rule, subsequent processing is skipped. Another model in the search space is trained, and step 504 to step 506 are performed.

For the anomaly detection algorithm filter rule, refer to the foregoing detailed descriptions. Details are not described herein again.

In a possible implementation, the anomaly detection module may not filter the anomaly detection algorithms (or the models), but trains each model in the initialized search space, and selects a model with optimal performance as an anomaly detection model for the new KPI.

It should be noted that each model in the initialized search space is traversed, and step 504 to step 506 are performed.

507: The model evaluation module obtains anomaly detection of each model, and obtains, through evaluation, a model with optimal performance.

It should be noted that the model with optimal performance is finally used as the model for the new KPI, to detect an abnormal state of the new KPI.

508: The model evaluation module sends information about the model with optimal performance to a terminal device, and the terminal device performs anomaly detection on the new KPI by using the model.

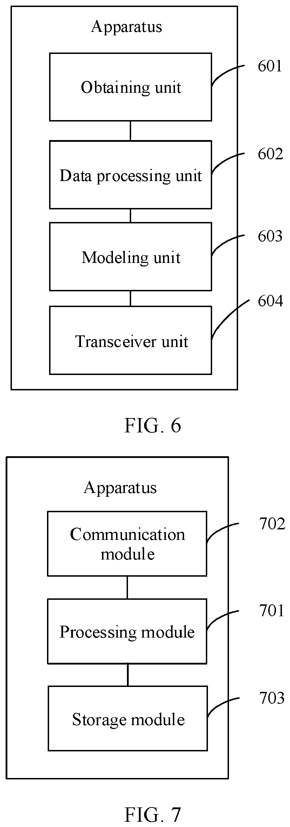

When functional modules are obtained through division based on corresponding functions, FIG. 6 is a schematic diagram of a possible structure of the apparatus in the foregoing embodiments. For example, the apparatus shown in FIG. 6 may be the computing device in embodiments of this application, or may be a component that is in the computing device and that implements the foregoing method. As shown in FIG. 6, the apparatus includes an obtaining unit 601, a data processing unit 602, a modeling unit 603, and a transceiver unit 604. The processing unit may be one or more processors, and the transceiver unit may be a transceiver.

The obtaining unit 601 is configured to support the computing device in performing the process of obtaining the first data set in step 401, and/or used for another process in the technology described in this specification.

The data processing unit 602 is configured to support the computing device in performing the process of determining the second indicator in step 401, and/or used for another process in the technology described in this specification.

The modeling unit 603 is configured to indicate to support the computing device in performing step 402, and/or used for another process in the technology described in this specification.

The transceiver unit 604 is configured to support communication between the computing device and another apparatus or device, and/or used for another process in the technology described in this specification. The transceiver unit 604 may be an interface circuit or a network interface of the computing device.

It should be noted that all related content of the steps in the foregoing method embodiments may be cited in function description of corresponding functional modules. Details are not described herein again.

In a possible implementation, the apparatus shown in FIG. 6 may alternatively be a chip used in the computing device. The chip may be a system-on-a-chip (System-On-a-Chip, SoC), a baseband chip with a communication function, or the like.

For example, when an integrated unit is used, a schematic diagram of a structure of an apparatus according to an embodiment of this application is shown in FIG. 7. In FIG. 7, the apparatus includes a processing module 701 and a communication module 702. The processing module 701 is configured to control and manage an action of the apparatus, for example, perform the steps performed by the obtaining unit 601, the data processing unit 602, and the modeling unit 603, and/or is configured to perform another process in the technology described in this specification. The communication module 702 is configured to perform the step performed by the transceiver unit 604, and support interaction between the apparatus and another device, for example, interaction between the apparatus and another terminal apparatus. As shown in FIG. 7, the apparatus may further include a storage module 703. The storage module 703 is configured to store program code and data of the apparatus.

When the processing module 701 is a processor, the communication module 702 is a transceiver, and the storage module 703 is a memory, the apparatus is the apparatus shown in FIG. 3.

An embodiment of this application provides a computer-readable storage medium. The computer-readable storage medium stores instructions. The instructions are used to perform the method shown in FIG. 4 or FIG. 5.

An embodiment of this application provides a computer program product including instructions. When the computer program product runs on an apparatus, the apparatus is enabled to implement the method shown in FIG. 4 or FIG. 5.

An embodiment of this application provides a wireless apparatus, including instructions. When the wireless apparatus runs on the apparatus shown in FIG. 3, FIG. 6, or FIG. 7, the apparatus is enabled to implement the method shown in FIG. 4 or FIG. 5. The apparatus may be a chip or the like.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of a database access apparatus is divided into different functional modules to implement all or some of the functions described above.

The processor in embodiments of this application may include but is not limited to at least one of the following various computing devices that run software: a central processing unit (central processing unit, CPU), a microprocessor, a digital signal processor (DSP), a microcontroller unit (microcontroller unit, MCU), an artificial intelligence processor, or the like. Each computing device may include one or more cores configured to perform an operation or processing by executing software instructions. The processor may be an independent semiconductor chip, or may be integrated with another circuit to form a semiconductor chip. For example, a SoC (system-on-a-chip) may include the processor and another circuit (for example, a codec circuit, a hardware acceleration circuit, or various buses and interface circuits). Alternatively, the processor may be integrated into an ASIC as a built-in processor of the ASIC, and the ASIC integrated with the processor may be independently packaged or may be packaged with another circuit. In addition to the core configured to perform an operation or processing by executing software instructions, the processor may further include a necessary hardware accelerator, for example, a field programmable gate array (field programmable gate array, FPGA), a PLD (programmable logic device), or a logic circuit that implements a dedicated logic operation.

The memory in embodiments of this application may include at least one of the following types: a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM). In some scenarios, the memory may alternatively be a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium that can carry or store expected program code in a form of an instruction or a data structure and that can be accessed by a computer. However, the memory is not limited thereto.

In this application, "at least one" refers to one or more. "A plurality of' refers to two or more than two. The term "and/or" describes an association relationship between associated objects and represents that three relationships may exist. For example, A and/or B may represent the following three cases: Only A exists, both A and B exist, and only B exists. A and B may be in a singular or plural form. The character "/" generally indicates an "or" relationship between the associated objects. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In the several embodiments provided in this application, it should be understood that the disclosed database access apparatus and method may be implemented in other manners. For example, the described database access apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the database access apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to a conventional technology, or all or some of the technical solutions may be implemented in the form of a software product. The software product is stored in a storage medium and includes several instructions for instructing a device (which may be a single-chip microcomputer, a chip or the like) or a processor to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A modeling method, comprising:
obtaining a first data set of a first indicator, and determining, based on the first data set, a second indicator similar to the first indicator; and
determining a first model based on one or more second models associated with the second indicator, wherein the first model is used to detect a status of the first indicator, the status of the first indicator comprises an abnormal state or a normal state, the second models are used to detect a status of the second indicator, and the status of the second indicator comprises an abnormal state or a normal state.

2. The method according to claim 1, wherein the first data set comprises values of the first indicator at a plurality of different time points.

3. The method according to claim 1 or 2, wherein the determining, based on the first data set, a second indicator similar to the first indicator comprises:
determining a second data set similar to the first data set, and using an indicator corresponding to the second data set as the second indicator.

4. The method according to claim 3, wherein the determining a second data set similar to the first data set comprises: determining the second data set whose feature vector is similar to a feature vector of the first data set.

5. The method according to claim 4, wherein a feature in the feature vector of the first data set and the feature vector of the second data set comprises at least one of a value change trend, a value periodicity, and a value fluctuation feature.

6. The method according to any one of claims 1 to 5, wherein the determining a first model based on one or more second models associated with the second indicator comprises:
determining, as the first model, a model with optimal performance in the second models associated with the second indicator.

7. The method according to claim 6, wherein before the determining, as the first model, a model with optimal performance in the second models associated with the second indicator, the method further comprises:
inputting the first data set into the second model, and determining performance of the second model based on an output of the second model.

8. The method according to claim 6, wherein before the determining, as the first model, a model with optimal performance in the second models associated with the second indicator, the method further comprises:
inputting the first data set into the second model, and processing the first data set based on a data preprocessing algorithm and a feature selection algorithm that are comprised in the second model, to obtain a first feature set;
filtering the first feature set according to a feature filter rule, to obtain a second feature set, wherein a quantity of features in the second feature set is less than a quantity of features in the first feature set; and
processing the second feature set by using an anomaly detection algorithm in the second model, and determining performance of the second model based on a processing result of the anomaly detection algorithm.

9. The method according to claim 8, wherein the feature filter rule is used to select, through filtering, a feature that matches an attribute of the first indicator.

10. The method according to claim 8 or 9, wherein before the processing the second feature set by using an anomaly detection algorithm, the method further comprises:
determining that the anomaly detection algorithm comprised in the second model satisfies an anomaly detection algorithm filter rule.

11. The method according to claim 10, wherein the anomaly detection algorithm filter rule is used to select, through filtering, an anomaly detection algorithm that matches the attribute of the first indicator.

12. The method according to claim 6, wherein before the determining, as the first model, a model with optimal performance in the second models associated with the second indicator, the method comprises:
determining a second model that satisfies an anomaly detection algorithm filter rule in the second models associated with the second indicator;
inputting the first data set into the second model that satisfies the anomaly detection algorithm filter rule, and processing the first data set based on a data preprocessing algorithm and a feature selection algorithm in the second model that satisfies the anomaly detection algorithm filter rule, to obtain a first feature set; and
processing the first feature set by using an anomaly detection algorithm in the second model that satisfies the anomaly detection algorithm filter rule, and determining performance of the second model based on a processing result of the anomaly detection algorithm.

13. The method according to claim 12, wherein before the processing the first feature set by using an anomaly detection algorithm in the second model that satisfies the anomaly detection algorithm filter rule, the method further comprises:
filtering the first feature set according to a feature filter rule.

14. An apparatus, comprising:
an obtaining unit, configured to obtain a first data set of a first indicator;
a data processing unit, configured to determine, based on the first data set, a second indicator similar to the first indicator; and
a modeling unit, configured to determine a first model based on one or more second models associated with the second indicator, wherein the first model is used to detect a status of the first indicator, the status of the first indicator comprises an abnormal state or a normal state, the second models are used to detect a status of the second indicator, and the status of the second indicator comprises an abnormal state or a normal state.

15. The apparatus according to claim 14, wherein the first data set comprises values of the first indicator at a plurality of different time points.

16. The apparatus according to claim 14 or 15, wherein the data processing unit is specifically configured to determine a second data set similar to the first data set, and use an indicator corresponding to the second data set as the second indicator.

17. The apparatus according to claim 16, wherein the data processing unit is specifically configured to determine the second data set whose feature vector is similar to a feature vector of the first data set.

18. The apparatus according to claim 17, wherein a feature in the feature vector of the first data set and the feature vector of the second data set comprises at least one of a value change trend, a value periodicity, and a value fluctuation feature.

19. The apparatus according to any one of claims 14 to 18, wherein the modeling unit is specifically configured to determine, as the first model, a model with optimal performance in the second models associated with the second indicator.

20. The apparatus according to claim 19, wherein the modeling unit is further configured to input the first data set into the second model, and determine performance of the second model based on an output of the second model.

21. The apparatus according to claim 19, wherein the modeling unit is further configured to input the first data set into the second model, and process the first data set based on a data preprocessing algorithm and a feature selection algorithm that are comprised in the second model, to obtain a first feature set;
filter the first feature set according to a feature filter rule, to obtain a second feature set, wherein a quantity of features in the second feature set is less than a quantity of features in the first feature set; and
process the second feature set by using an anomaly detection algorithm in the second model, and determine performance of the second model based on a processing result of the anomaly detection algorithm

22. The apparatus according to claim 21, wherein the feature filter rule is used to select, through filtering, a feature that matches an attribute of the first indicator.

23. The apparatus according to claim 21 or 22, wherein the modeling unit is further configured to: before processing the second feature set by using the anomaly detection algorithm, determine that the anomaly detection algorithm comprised in the second model satisfies an anomaly detection algorithm filter rule.

24. The apparatus according to claim 23, wherein the anomaly detection algorithm filter rule is used to select, through filtering, an anomaly detection algorithm that matches the attribute of the first indicator.

25. The apparatus according to claim 19, wherein the modeling unit is further configured to determine a second model that satisfies an anomaly detection algorithm filter rule in the second models associated with the second indicator;
input the first data set into the second model that satisfies the anomaly detection algorithm filter rule, and process the first data set based on a data preprocessing algorithm and a feature selection algorithm in the second model that satisfies the anomaly detection algorithm filter rule, to obtain a first feature set; and
process the first feature set by using an anomaly detection algorithm in the second model that satisfies the anomaly detection algorithm filter rule, and determine performance of the second model based on a processing result of the anomaly detection algorithm.

26. The apparatus according to claim 25, wherein the modeling unit is further configured to: before processing the first feature set by using the anomaly detection algorithm in the second model that satisfies the anomaly detection algorithm filter rule, filter the first feature set according to a feature filter rule.

27. An apparatus, comprising at least one processor and a memory, wherein the at least one processor is coupled to the memory;
the memory is configured to store a computer program; and
the at least one processor is configured to execute the computer program stored in the memory, to enable the apparatus to perform the method according to any one of claims 1 to 13.

28. A computer-readable storage medium, wherein the computer-readable storage medium stores a computer program or instructions, and when the computer program or the instructions is/are run, the method according to any one of claims 1 to 13 is implemented.
